# EUROPÄISCHE PATENTSCHRIFT

(11) **EP 3 714 410 B1**
(45) Veröffentlichungstag und Bekanntmachung des Hinweises auf die Patenterteilung: **28.08.2024**
(21) Anmeldenummer: 18812029.9
(22) Anmeldetag: 17.10.2018
(51) Int. Cl.: B29C 45/76, G06Q 10/0631, B29C 45/17

(54) **VERFAHREN ZUR ANSICHT UND AUSWAHL VON PRODUKTIONSMITTELN, INSBESONDERE PERIPHEREN GERÄTEN, FÜR DIE SPRITZGIESSINDUSTRIE, SOWIE EINE INDUSTRIEANLAGE**
METHOD FOR VIEWING AND SELECTING PRODUCTION MEANS, IN PARTICULAR PERIPHERAL DEVICES, FOR THE INJECTION MOLDING INDUSTRY, AND AN INDUSTRIAL FACILITY
PROCÉDÉ DE VUE ET DE SÉLECTION DE MOYENS DE PRODUCTION, EN PARTICULIER D'APPAREILS PÉRIPHÉRIQUES, POUR L'INDUSTRIE DU MOULAGE PAR INJECTION, ET INSTALLATION INDUSTRIELLE

(30) Priorität: 29.10.2017 AT 509022017
(43) Veröffentlichungstag der Anmeldung: 30.09.2020
(73) Patentinhaber: Wittmann Technology GmbH, 1220 Wien (AT)
(72) Erfinder: WITTMANN, Michael, Peter, 2100 Leobendorf (AT); RELLA, Johan, 2671 Payerbach (AT)
(74) Vertreter: Felfernig, Oliver
(86) Internationale Anmeldenummer: PCT/AT2018/060245
(87) Internationale Veröffentlichungsnummer: WO 2019/079835

(56) Entgegenhaltungen:
- DE-B4- 102005 014 941
- DE-U1- 202011 102 621
- US-A1- 2006 082 010
- US-A1- 2016 203 232
- US-A1- 2016 375 701

## Beschreibung

Die Erfindung betrifft ein Verfahren zur Ansicht und Auswahl von Produktionsmitteln, insbesondere peripheren Geräten, für die Spritzgießindustrie, sowie eine Industrieanlage und Verarbeitungsmaschine, wie es in den Oberbegriffen der Ansprüche 1, 11 und 12 beschrieben ist.

Es sind bereits Verfahren zur Vernetzung von Industrieanlagen zur Erzeugung eines Spritzgießteils bekannt, bei denen die einzelnen Produktionsmittel, wie beispielsweise eine Spritzgießmaschine, ein Temperiergerät, ein Granulat-Trockner, usw. vernetzt werden. Dabei werden die einzelnen Geräte von einem Netzwerkspezialisten mit einem Netzwerk verbunden, worauf der Netzwerkspezialist an diesen Geräten notwendige Einstellungen vornimmt, im Besonderen auch eine entsprechende Adresse zuteilt. Anschließend ist es erforderlich, dass ein weiterer Fachmann im Zuge einer Werkzeugabnahme die für die Produktion eines Spritzgießteiles notwendigen Prozessparameter und benötigten Produktionsmittel, insbesondere Peripheriegeräte, ermittelt und bestimmt.

Nach Vornahme eines Werkzeugwerkwechsels ist es wiederum notwendig, dass die Industrieanlage gemäß den Ermittlungen der vorangegangenen Werkzeugabnahme wieder zusammengestellt wird, wobei der User bzw. Maschineneinrichter hierzu entsprechende Papierdokumente in Form von Arbeitsblätter bzw. Werkzeugdatenblätter zur Hilfe nimmt. Dabei treten jedoch sehr oft Fehleinstellungen oder falsch zusammengeschlossene Produktionsmittel auf, was meist zu Ausschuss-Spritzgießteilen oder im schlimmsten Fall zu Beschädigungen in der Industrieanlage führt.

Aktuell stellt das Werkzeugdatenblatt für den Maschineneinrichter eine Sammlung von wichtigen Informationen zum richtigen Zusammenstellen und Einstellen von Spritzgieß-Arbeitszellen dar. Da die Produktionsmittel sehr vielfältig sind, bleibt nur die manuelle Erstellung und bei Wiederverwendung eines Werkzeugs das manuelle Ausdrucken dieses Werkzeugdatenblattes, worauf der Maschineneinrichter entsprechende Einstellungen Vorort vornimmt, wobei es sehr oft zu Verwechslungen, Fehleinstellung, oder das Übersehen von Einstellungen usw. vorkommt.

Aus der DE 102005014941 A1 ist ein Verfahren zum Bereitstellen von Dokumentationsinformationen bekannt. Dabei werden die einzelnen Dokumentationen für die einzelnen Komponenten von den einzelnen Komponenten direkt oder über ein Netzwerk, insbesondere das Internet, abgefragt und in einem einzigen Gesamtdokument gebündelt. Somit kann der Benutzer durch Öffnen dieses Gesamtdokumentes jede Bedienungsanleitung, Datenblatt für die verwendeten Komponenten durchsehen und muss somit nicht mehr die Daten direkt an den entsprechenden Komponenten auslesen.

In der US 2016/203232 A1 ist ein Werkzeugsystem beschrieben, bei dem ein Werkzeugscanner vorhanden ist, der dazu konfiguriert ist, eine Werkzeugkennung auf einem Werkzeug zu scannen, wobei aus einer Werkzeugdatenbank Werkzeuginformationen der Werkzeugkennung zugeordnet werden.

Aus der US 2006/082010 A1 ist ein Verfahren zur Anpassung der Schließkraft einer Spritzgießmaschine in Abhängigkeit von diversen Einspritzparametern und historischen und aktuellen Rückmeldungen von Messsensoren bekannt, wobei die Maschinensteuerung mit einer Datenbank verbunden ist. Die Datenbank enthält eine Auflistung von gelieferten Maschinen und ihren zugeordneten Betriebsparametern, auf die selektiv zugegriffen werden kann und auf die Maschinensteuerung der lokalen Spritzgussmaschine heruntergeladen werden kann. Die Datenbank kann auch periodisch mit Betriebsinformationen und erfassten Messungen von der Spritzgussmaschine aktualisiert werden, wodurch eine Offline-Analyse der Betriebsbedingungen ermöglicht wird, die von und in der Spritzgussmaschine oder spezifischen Komponenten davon erfahren werden.

Weiters beschreibt die US 2016/375701 A1 ein System zum Formen von Produkten aus einem Kunststoffmaterial, wie etwa ein Spritzgusssystem, und insbesondere ein Formsystem, das das automatische Drucken von Etiketten ermöglicht, die dem geformten Teil zugeordnet sind.

Aus der DE 202011102621 U1 ist eine Art Werkzeugkennung beschrieben, wobei eine elektrische oder elektronische Steuerungsvorrichtung im Werkzeug untergebracht ist und drahtlos oder über ein Kabel mit der Zentraleinheit (SGM-Steuerung) verbunden ist.

Aus der DE 102005014941 B4 ist ein Verfahren zum Bereitstellen von Dokumentationsinformationen von komplexen Maschinen und Anlagen, insbesondere Spritzgussmaschinen, bekannt, wobei die Dokumentationsinformationen und Identifizierungsinformationen in Dokumentenspeicher eingelesen werden und daraus eine Gesamtdokumentation erstellt wird.

Weiters offenbart die WO 2004/076143 A2 eine globale Steuerungssoftware die bauteilspezifischen Parameter von Komponenten in eine separate Speichereinrichtung ablegt. Damit ist es möglich, dass bei einer Inbetriebnahme diese Parameter wieder zurück geladen werden können.

Die DE 102004004695 A1 wiederum offenbart ein Verfahren und System zum Zusammentragen von Anlagendokumentationen.

Weiters zeigt die DE 102009007559 A1 ein Antriebssystem mit einer Steuerungseinheit und mit mindestens zwei daran angeschlossenen Komponenten, wobei entsprechende Erkennungsdaten abgelegt sind.

Aufgabe der Erfindung ist es daher ein Verfahren und eine Industrieanlage der eingangs genannten Art zu schaffen, mit der die obgenannten Nachteile vermieden werden und gleichzeitig eine Vereinfachung für Wartungs- und Reparaturarbeiten, sowie einem Werkzeugwechsel geschaffen werden.

Die Aufgabe wird durch die Erfindung gelöst.

Das erfindungsgemäße Verfahren zur Ansicht und Auswahl von Produktionsmitteln ist dadurch gekennzeichnet, dass nach manueller Speicheranforderung an einer Steuervorrichtung, insbesondere einer Arbeitszellensteuerung, oder an der Verarbeitungsmaschine sämtliche angeschlossene Produktionsmittel abgefragt werden und von diesen, definierte Daten, wie die jeweiligen Einstellungen, sowie Programmabläufe, Rezepte und sonstige Konfigurationen, ausgelesen werden und zusammen mit den internen Einstellungen der Verarbeitungsmaschine in Abhängigkeit des Spritzgießteiles zu einem Werkzeugdatensatz verbunden werden, wobei eine Auflistung der für die Produktion dieses Spritzgießteils der notwendigen Produktionsmittel jederzeit automatisch aus dem oder den Werkzeugdatensätzen generiert wird und an einem Ausgabepunkt, vorzugsweise der Verarbeitungsmaschine, angezeigt wird, wobei die Übertragung der dem jeweiligen Produktionsmittel zugehörigen definierten Daten auch zu den Produktionsmitteln erfolgt.

Vorteilhaft ist hierbei, dass von einer zentralen Stelle, vorzugsweise von einem Verarbeitungsgerät, insbesondere einer Spritzgießmaschine, notwendige Daten von den angeschlossenen Produktionsmitteln gesammelt werden und zu einem oder mehreren Werkzeugdatensätzen verarbeitet werden, die einfach wieder aufgerufen werden können. Weiters liegt ein wesentlicher Vorteil darin, dass durch das automatische selbständige Erkennen von neu hinzugefügten oder entfernten Geräten, insbesondere Produktionsmitteln, und der daraus geschaffenen Liste bzw. Arbeitszellenverzeichnis eine einfache Verwaltung und Einbindung geschaffen wird. Die logische Zuweisung von Produktionsmitteln zur Arbeitszelle ergibt sich automatisch aus der Zusammenstellung der jeweiligen Liste. Diese Liste oder dieses Arbeitszellenverzeichnis wird entweder bei Bedarf aus dem Werkzeugdatensatz generiert oder kann bei der Datensicherung ein Bestandteil des Werkzeugdatensatzes sein und kann wie dieser, intern auf der Maschinensteuerung oder in einem MES/ERP-System abgespeichert werden, wo er einfach abrufbar ist.

Es sind aber auch die Maßnahmen von Vorteil, bei denen nach Durchführung eines Werkzeugtausches an der Verarbeitungsmaschine, der dazugehörige Werkzeugdatensatz über ein externes MES- oder ERP-System (Manufacturing Execution System oder Enterprise Resource Planning-System) zur Verarbeitungsmaschine übermittelt oder aus dem internen Werkzeugkatalog bzw. Einstellungen der Verarbeitungsmaschine entnommen wird und der Werkzeugdatensatz von der Verarbeitungsmaschine oder einer Arbeitszellensteuerung automatisch in die entsprechenden Bestandteile der angeschlossenen und notwendigen Produktionsmittel aufgeteilt und an diese übertragen wird. Dadurch wird erreicht, dass jedes Produktionsmittel seine Einstellungen aus dem Werkzeugdatensatz automatisch zugewiesen bekommt. Damit wird verhindert, dass ein Maschineneinrichter aus einer Vielzahl von unterschiedlichen Parametersätzen den entsprechenden für dieses Werkzeug auswählen muss und es somit zu Verwechslungen kommen kann. Dadurch entfällt die Auswahl und somit der häufigsten Fehlerquelle, nämlich der Verwechslung bzw. Wahl des falschen Parametersatzes, Einstellungen, Rezepte, Programme, etc. Es ist außerdem möglich, dass sämtliche Werkzeugdatensätze einer Arbeitszelle gesammelt an einem Verarbeitungsgerät oder der Arbeitszellensteuerung abrufbar sind, sodass von dieser Hauptstation sich der Maschineneinrichter einen Überblick über die Anlage bzw. Arbeitszelle machen kann und die notwendigen Produktionsmittel für einen anstehenden Werkzeugwechsel vorbereiten kann.

Von Vorteil sind die Maßnahmen, bei denen als Werkzeugdatensätze zusätzlich zu den maschineninternen Prozessparametern der Verarbeitungsmaschine für beispielsweise die Plastifizierung, den Schmelze-Eintrag, sowie dem Werkzeugverschluss, die jeweiligen Einstellungen, Parameter, Kennungen der unterschiedlichen Produktionsmitteln für die Werkzeugtemperierung, Kühlung, Materialtrocknung,-Dosierung und -förderung, sowie Ablaufprogramme für die automatische Entformung des jeweiligen Spritzgießteiles durch Roboter, Greiferkennungen, sowie Parameter für externe Prozesshilfsmittel und sonstige teilespezifische Daten hinterlegt werden. Dadurch wird erreicht, dass alle notwendigen Daten digital in der Industrieanlage vorhanden sind, die jederzeit für die Erstellung des Werkzeugdatensatzes herangezogen werden können. Die Auswahl der für die Erzeugung des Werkzeugdatensatzes heranzuziehenden Daten erfolgt automatisch und hängt typischerweise vom Typ des Produktionsmittels ab. Manuelle Anpassungen an der Auswahl der Anpassungen sind ebenso möglich.

Vorteilhaft sind auch die Maßnahmen, bei denen zusätzliche Daten zu Werkzeugdatensätzen manuell direkt an einem Produktionsmittel, vorzugsweise der Verarbeitungsmaschine oder über ein externes anschließbares oder über ein Netzwerk verbundenes Eingabegerät, insbesondere einem Computer, eingegeben und/oder ausgewählt und gespeichert werden. Dadurch wird erreicht, dass auf einfache Art und Weise zusätzliche Information oder Bemerkungen einfach hinzugefügt werden können, die bei einem späteren Werkzeugwechsel sicher zur Verfügung stehen und somit nicht übersehen werden können. Beispielsweise kann es von Interesse sein, dass der Verantwortliche für die Freigabe der Bemusterung eingetragen wird, sodass bei ev. auftretenden Probleme nach einem Werkzeugwechsel dieser kontaktiert werden kann. Ebenso können Konstruktionszeichnungen des Werkzeuges, Details zu Kühl- und Heißkanälen, Fließcharakteristika und weitere Informationen aufgenommen werden. Derartige Zusatzinformationen erleichtern die Wiederinbetriebnahme der Anlage nach einem Werkzeugwechsel bzw. die Fehleranalyse.

Von Vorteil sind auch die Maßnahmen, bei denen nach einem Werkzeugwechsel selbstständig von der Steuervorrichtung, insbesondere der Arbeitszellensteuerung, oder einem Produktionsmittel, insbesondere der Verarbeitungsmaschine, vor dem Produktionsstart oder der Inbetriebnahme überprüft wird, ob sämtliche Produktionsmittel gemäß zugehörigem Werkzeugdatensatz angeschlossen wurden und die entsprechenden Einstellungen übermittelt wurden. Dadurch wird erreicht, dass erst nach vollständigem Anschluss der Produktionsmittel und fehlerfreier Übermittelung der Einstellungen an die Produktionsmittel, gemäß dem Werkzeugdatensatz, ein Produktionsstart oder Inbetriebnahme möglich ist, sodass die Herstellung fehlerhafter Spritzgießteile, sogenannter Ausschussteile, verhindert wird.

Es sind aber auch Maßnahmen von Vorteil, bei denen von der Steuervorrichtung, insbesondere der Arbeitszellensteuerung, oder dem Produktionsmittel, insbesondere der Verarbeitungsmaschine, eine Vorschau und/oder ein Soll-/Ist-Vergleich der bisher angeschlossenen Produktionsmittel mit den notwendigen Produktionsmitteln gemäß dem gespeicherten Werkzeugdatensatz vorgenommen wird. Dadurch wird erreicht, dass direkt am Produktionsmittel, insbesondere an der Verarbeitungsmaschine, von einem Maschineneinrichter erkannt wird, welche Produktionsmittel noch an- bzw. abgeschlossen gehören. Damit hat der Maschineneinrichter eine sofortige Sicherstellung der richtig anzuschließenden Produktionsmittel, wie dies beim Stand der Technik nicht möglich ist.

Darüber hinaus sind die Maßnahmen von Vorteil, bei denen von der Steuervorrichtung, insbesondere der Arbeitszellensteuerung, oder der Steuerung der Verarbeitungsmaschine, aus den Werkzeugdatensätzen eine Liste für die Arbeitszelle, insbesondere ein Arbeitszellenverzeichnis, generiert wird. Dadurch wird erreicht, dass auf einfache Art und Weise eine Aufstellung der benötigten Produktionsmittel erstellt werden kann.

Vorteilhaft sind aber auch die Maßnahmen, bei der die Speicherung der Werkzeugdatensätze auf einem Produktionsmittel, insbesondere der Verarbeitungsmaschine, oder auf einem externen Speicher, vorzugsweise in einem MES/ERP-System (Manufacturing Execution System / Enterprise Resource Planning-System) erfolgt. Dadurch wird erreicht, dass die Daten jederzeit von unterschiedlichen Arbeitszellen über das Netzwerk abrufbar sind.

Es sind aber auch die Maßnahmen von Vorteil, bei denen der Werkzeugdatensatz zumindest einen Bereich für eine Spritzgießmaschine und einen oder mehrere Bereiche für Automatisierungsanlagen, Temperiergeräte, Durchflussregler, Materialtrockner und -Förderer, Dosiergeräte, Qualitätsprüfung, Werkzeugdaten, Heißkanalregler, und/oder externe Zusatzgeräte für die Prozessregelung, sowie Sonderprogramme und sonstige Informationen aufweist, die automatisch ermittelt und/oder manuell erfasst, insbesondere eingegeben, werden. Dadurch wird erreicht, dass eine übersichtliche digitale Zusammenfassung geschaffen wird, die sämtliche Daten beinhaltet und somit Fehleinstellungen verhindert werden. Dadurch muss sich der Maschineneinrichter nicht mehr mit den Details der Einstellungen der diversen Produktionsmittel befassen, wie es sonst bei gedruckten Werkzeugdatenblättern notwendig wäre.

Es sind aber auch die Maßnahmen von Vorteil, bei denen nach einer vorangegangenen automatischen Erfassung eines Werkzeugdatensatzes, bei Wiederaufruf dieses Werkzeugdatensatzes, fehlende Produktionsmittel am Ausgabepunkt angezeigt werden und/oder ein Warnsignal bzw. Warnleuchte ausgelöst wird. Dadurch wird erreicht, dass ein Produktionsstart oder eine Inbetriebnahme nach einem Werkzeugtausch nur bei richtig aufgebauter Arbeitszelle möglich ist, sodass keinerlei fehlerhafte Teile produziert werden können oder es zu Beschädigungen kommen kann.

Weiters wird die Aufgabe der Erfindung aber auch durch eine Industrieanlage oder Produktionssystem gelöst, bei der eine Steuervorrichtung in Form einer Arbeitszellensteuerung, oder ein Produktionsmittel, insbesondere eine Verarbeitungsmaschine, zum Abfragen und Speichern von Werkzeugdatensätzen ausgebildet ist, wobei bei einem Werkzeugtausch eine Auflistung der anzuschließenden Produktionsmittel an einem Ausgabepunkt manuell oder automatisch aufrufbar und ablesbar ist.

Vorteilhaft ist hierbei, dass dadurch keinerlei auf Papier erfasste Dokumente, insbesondere Werkzeugdatenblätter, mehr benötigt werden, bei denen es oftmals zu Verwechslungen kommen kann bzw. oft Daten übersehen bzw. überlesen werden. Ein wesentlicher Vorteil liegt bei der erfindungsgemäßen Lösung darin, dass verschiedenste Kontroll- und Prüfmechanismen eingesetzt werden können, die falsch angeschlossene und eingestellte Produktionsmittel erkennt und eine Inbetriebnahme der Industrieanlage verhindert wird.

Die Aufgabe der Erfindung wird aber auch durch eine Verarbeitungsmaschine in Form einer Spritzgiessmaschine gelöst, bei der eine Steuervorrichtung zum Abfragen und Speichern von einem oder mehreren Werkzeugdatensätzen (30) ausgebildet ist, wobei bei einem Werkzeugtausch ein Werkzeugdatensatz zu dem Spritzgießteil mit einer Auflistung der anzuschließenden Produktionsmittel an einem Ausgabepunkt manuell oder automatisch aufrufbar und ablesbar ist.

Die Erfindung wird an Hand mehrerer in den Zeichnungen dargestellten Ausführungsbeispielen näher erläutert, wobei jedoch die Erfindung nicht auf das dargestellte und beschriebene Ausführungsbeispiel beschränkt ist.

Es zeigen:
- Fig. 1: ein Übersichtbild einer kunststoffverarbeitenden Industrieanlage, in vereinfachter, schematischer Darstellung;
- Fig. 2: ein Ablaufdiagramm für die Industrieanlage nach Fig. 1, in vereinfachter, schematischer Darstellung;
- Fig. 3: eine Displayanzeige am Verarbeitungsgerät, in vereinfachter schematischer Darstellung.

Einführend sei festgehalten, dass in den unterschiedlichen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die beschriebene Figur bezogen und sind bei einer Lageänderung sinngemäß auf die neue Lage zu übertragen. Auch können Einzelmerkmale oder Merkmalskombinationen aus den gezeigten und beschriebenen Ausführungsbeispielen für sich eigenständige erfinderische Lösungen darstellen.

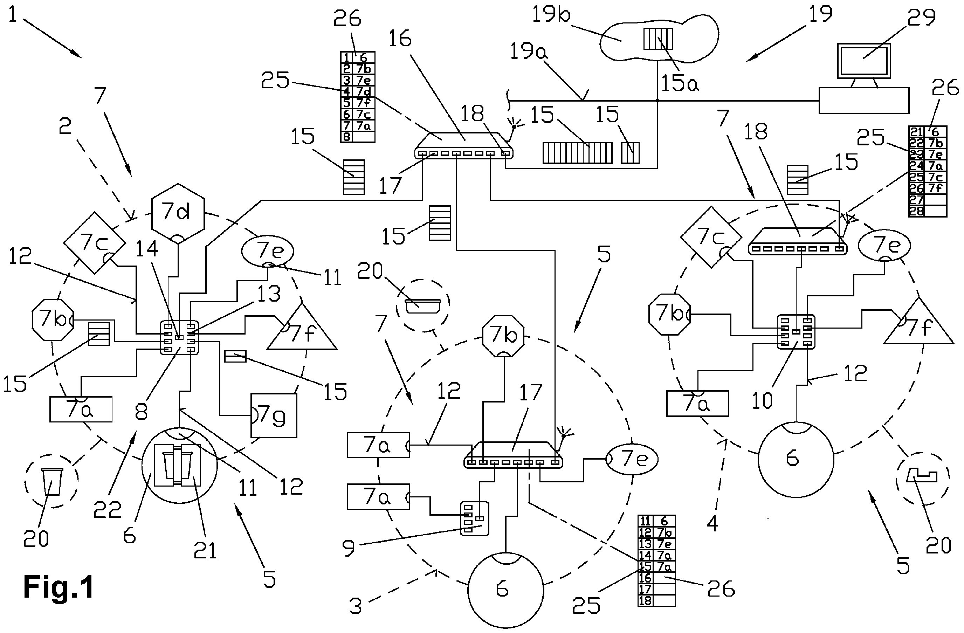

Grundsätzlich ist zu den Ausführungsbeispielen der Fig. 1 bis 3 zu erwähnen, dass der Einsatz vorzugsweise in einer kunststoffverarbeiteten Industrie 1 bzw. Industrieanlagen 1 erfolgt.

In den Fig. 1 bis 3 ist die Industrieanlage 1 mit einer oder mehreren Arbeitszellen 2 bis 4 gezeigt, wobei gewisse Produktionsmittel 5, vereinfacht dargestellt, in den Arbeitszellen 2 bis 4 organisiert sind. Die Produktionsmittel 5 bestehen vorzugsweise aus zumindest einer Verarbeitungsmaschine 6 der kunststoffverarbeitenden Industrie 1, insbesondere einer Spritzgießmaschine 6, und mindestens einem Peripheriegerät 7. Die Peripheriegeräte 7 können beispielsweise aus einem Temperiergerät 7a, einem Roboter bzw. Entnahmeroboter 7b, einem Dosiergerät 7c für Granulat, einem Granulat-Trockner 7d, einem Granulat-Fördergeräte 7e, einem Kamerasystem 7f für die Qualitätskontrolle, einem automatischen Durchflussregler 7g usw. gebildet sein, wie dies schematisch dargestellt ist.

Bei dem dargestellten Ausführungsbeispiel der Fig. 1 sind die Produktionsmittel 5 in einer Arbeitszelle 2 bis 4 mit einem Kommunikationsmittel 8 bis 10, insbesondere einem Switch 8 bis 10, verbunden, d.h., dass jedes Verarbeitungsgerät 6 und Peripheriegerät 7 vorzugsweise zur besseren Erkennung mit einem hardware- oder softwaremäßig ausgebildetes Kommunikations- und/oder Erkennungsmodul 11 ausgestattet ist. Die Produktionsmittel 5 sind über eine Leitung, insbesondere ein handelsübliches Schnittstellenkabel 12, mit jeweils einem Ein-/Ausgang 13 am Kommunikationsmittel 8 bis 10 verbunden, wobei auch eine drahtlose Verbindung beispielsweise per WLAN möglich wäre. Das Kommunikationsmittel 8 bis 10 ist über einen Kommunikations-Ein-u/o Ausgang 14 zum Versenden von Datenpaketen 15 bzw. Datensätze 15, wie schematisch dargestellt, an eine übergeordnete Arbeitszellensteuerung 16 bis 18 verbunden. Es ist aber auch möglich, dass kein Kommunikationsmittel 8 bis 10 zum Einsatz kommt und das Verarbeitungsgerät 6 und die Peripheriegeräte 7 direkt an einer Arbeitszellensteuerung 16 bis 18 angeschlossen wird, wie dies unteranderem auch in der Arbeitszelle 3 dargestellt ist. Ebenso ist es möglich, dass mehrere derartige Kommunikationsmittel 8 bis 10 in einer Arbeitszelle 2 bis 4 angeordnet sind. Der vollständigkeitshalber wird darauf hingewiesen, dass die einzelnen Arbeitszellen 2 bis 4 unterschiedlich ausgestattet sind bzw. sein können, d.h., dass jede Arbeitszelle 2 bis 4 eine verschiedene Anzahl und/oder Typen an Produktionsmittel 5 aufweist. Vorzugsweise ist eine Arbeitszellensteuerung 16 bis 18 als übergeordnete Arbeitszellensteuerung 16 bis 18, in unserem Fall die Arbeitszellensteuerung 16, ausgebildet, die über den Kommunikations-Ein- u/o Ausgang 14 einen Datenaustausch an eine übergeordnete Stelle ein Netzwerk 19 vorzugsweise einen betriebsinternen Intranet 19a und/oder einem übergeordneten externen Netzwerk 19, insbesondere einem Internet 19b, durchführt.

Bei einer derartigen Industrieanlage 1 arbeitet jede Arbeitszelle 2 bis 4 unabhängig von den anderen Arbeitszellen 2 bis 4, d.h., dass in jeder Arbeitszelle 2 bis 4 immer jene Produktionsmittel 5 eingesetzt sind, die für die Herstellung eines bestimmten Produktes, insbesondere eines Spritzgießteils 20, benötigt werden. Beispielsweise könnte bei der dargestellten Industrieanlage 1 in der Arbeitszelle 2 ein Werkzeug 21, dass vorzugsweise aus zwei oder auch mehreren sich öffnenden Werkzeugformen zum Einspritzen eines Kunststoffes gebildet ist, zum Erzeugen des Spritzgießartikel bzw. Spritzgießteil 20 beispielsweise in Form einer Abdeckung in Innenbereich eines Automobils in Hochglanzausführung oder Getränkebecher, usw., eingesetzt sein, das für die Temperierung ein Temperiergerät 7a benötigt, für die schonende Entnahme einen Roboter 7b, für die richtige Zusammensetzung der zu verarbeitenden Kunststoffgranulate ein Dosiergerät 7c, für die Trocknung des Kunststoffgranulats einen Trockner 7d, für die Förderung des Granulats zur Plastifizier- und Einspritzeinheit der Verarbeitungsmaschine ein Fördergerät 7e, für die Kontrolle des fertigen Produktes ein Kamerasystem 7f und für die automatische Durchflusskontrolle durch das Werkzeug einen Durchflussregler 7g.

Man kann also sagen, dass die Industrieanlage 1 derart ausgebildet ist, dass diese zum Verwalten und Steuern von den Produktionsmitteln 5 mit einer oder mehrerer Arbeitszellen 2 bis 4 durchführt, wobei die Produktionsmittel 5 in den Arbeitszellen 2 bis 4 organisiert sind, die jeweils aus vorzugsweise zumindest einer Verarbeitungsmaschine 6 der kunststoffverarbeitenden Industrie 1 und mindestens einem Peripheriegerät 7 gebildet werden, die über ein Produktionsmittel-Netzwerk 22 miteinander verbunden sind. Die Produktionsmittel 5 sind mit der Arbeitszellensteuerung 16 bis 18 verbunden, wobei die Produktionsmittel 5 automatisch von der Arbeitszellensteuerung 16 bis 18 oder der entsprechenden Verarbeitungsmaschine 6 der Arbeitszelle 2 bis 4 erkannt werden, worauf die Arbeitszellensteuerung 16 bis 18 oder die Verarbeitungsmaschine 6 der Arbeitszelle 2 bis 4 einerseits die Kommunikation bzw. den Datenaustausch 15 mit dem vorzugsweise Netzwerk 19, insbesondere einem Intranet 19a und/oder einem Internet 19b, und andererseits mit den Produktionsmitteln 5 der Arbeitszelle 2 bis 4, insbesondere über das Produktionsmittel-Netzwerk 22, durchführt und direkte Kommunikation der Produktionsmittel 5 untereinander herstellt. Beim Anbinden eines Produktionsmittels 5 mit der Arbeitszellensteuerung 16 bis 18 oder an die entsprechende Verarbeitungsmaschine 6 werden diese automatisch erkannt und es bekommen die Produktionsmittel 5 von der Arbeitszellensteuerung 16 bis 18 bzw. der Verarbeitungsmaschine 6 eine Adresse 25 zugeordnet, wobei die Arbeitszellensteuerung 16 bis 18 oder Verarbeitungsmaschine 6 automatisch eine Liste 26 bzw. ein Arbeitszellenverzeichnis 26 der in der Arbeitszelle 2 bis 4 vorhandenen Produktionsmittel 5 und Funktionen erstellt. Dadurch wird ein sogenanntes "Plug and Produce" geschaffen, bei dem nur mehr die Geräte, also die Produktionsmittel 5, über vorzugsweise eine einzige Leitung 12 angeschlossen werden, worauf alle weiteren Schritte automatisch vorgenommen werden.

Jeder Spritzgießteil 20 verlangt in Abhängigkeit vom zu verarbeitenden Kunststoffmaterial, von der Anzahl und Anordnung der Kavitäten im Spritzgießwerkzeug 21, Ausformung von Kühlkanälen in den jeweiligen Kavitäten, Anordnung und Gestaltung von Kernen und Schiebern, Orientierung und Anzahl von Anspritzpunkten und der Erfordernisse nach Oberflächenbeschaffenheit und anderer qualitativer Charakteristika, zusätzlich zu den maschineninternen Prozessparametern für die Plastifizierung, den Schmelze-Eintrag, sowie dem Werkzeugverschluss, die Verwendung von unterschiedlichen Produktionsmitteln 5 für die Werkzeugtemperierung, Kühlung, Materialtrocknung und -Dosierung, sowie Materialförderung, um den gewünschten Spritzgießteil 20 in der geforderten Qualität zu erhalten.

Dabei durchläuft ein Spritzgießteil 20 typischerweise vor der Freigabe für die Serienproduktion einen Bemusterungsprozess, bei dem die maschineninternen Prozessparameter und die notwendigen Produktionsmittel 5 mit den jeweiligen Einstellungen festgelegt werden, wobei dies im Stand der Technik in Arbeitsblättern bzw. Werkzeugdatenblatt manuell auf Papier eingetragen wird, d.h., dass die für den jeweiligen Spritzgießprozess notwendige Zusammensetzung von Produktionsmitteln 5 aktuell manuell in einem Werkzeugdatenblatt auf Papier festgehalten wird, wobei die zugehörigen im Bemusterungsprozess festgelegten Einstellungen entweder lokal in der jeweiligen Steuerung des Produktionsmittels 5 abgelegt oder auf diesem Werkzeugdatenblatt vermerkt werden, sodass dieses Werkzeugdatenblatt, typischerweise in Form eines ausgedruckten Blattes, dem Maschineneinrichter bei einem Werkzeugwechsel des Werkzeuges 21 als Leitfaden für das richtige Zusammenstellen einer Arbeitszelle 2 bis 4, insbesondere eine Spritzgießarbeitszelle 2 bis 4, mit den notwendigen Produktionsmitteln 5, sowie den zugehörigen Einstellungen dient. Da eine Spritzgießarbeitszelle 2 bis 4 aus mehreren Produktionsmitteln 5 in unterschiedlicher Bauart und Ausprägung besteht, ist eine falsche Zusammenstellung von Arbeitszellen 2 bis 4, bzw. die Eingabe von falschen Prozessparametern ein häufiges Problem und eine Ursache für die Erzeugung von Ausschussteilen beziehungsweise Teilen mit versteckten Defekten. In manchen Fällen hat das schon zu Rückrufaktionen von Waren geführt, die einen solcherart defekten Spritzgießteil 20 eingebaut hatten.

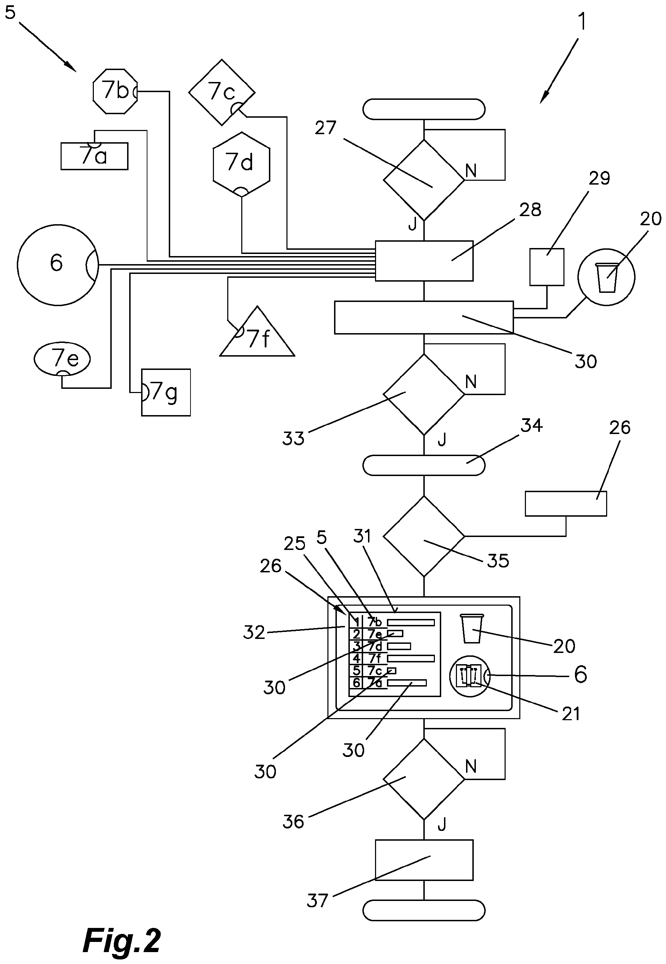

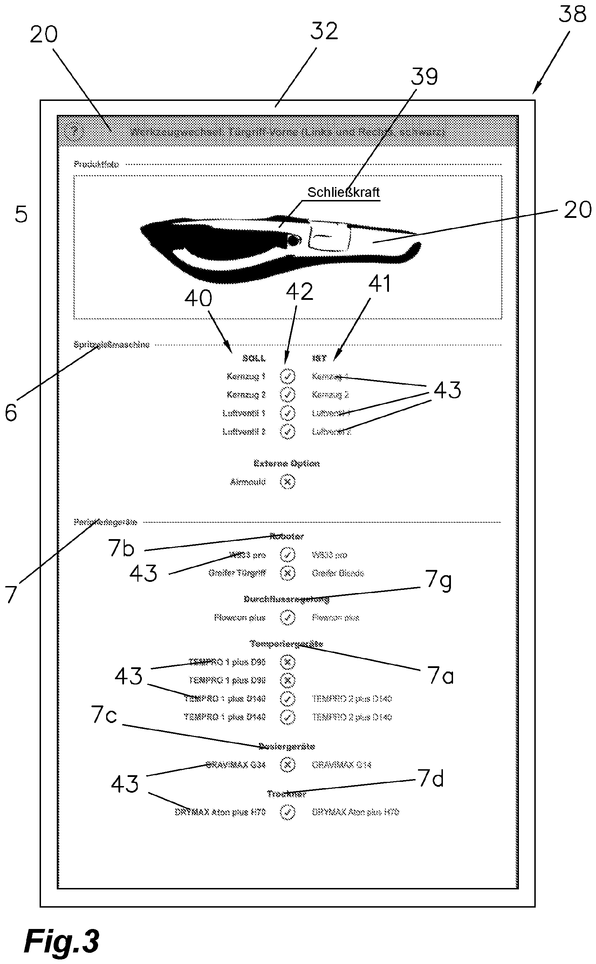

Erfindungsgemäß ist nunmehr vorgesehen, dass dem Maschineneinrichter vorzugsweise auf der Verarbeitungsmaschine 6, insbesondere einer Kunststoffspritzgießmaschine, oder einer Arbeitszellensteuerung mit Ausgabeeinheit die Vorschau und/oder den Soll-/Ist-Vergleich, wie er in Fig. 2 oder 3 schematisch dargestellt ist, auf die Produktionsmittel 5, die für ein neu einzuspannendes oder bereits in der Maschine befindliches Werkzeug 21 notwendig wären, ermöglicht. Dies wird derart erreicht, dass nach manueller Speicheranforderung 27, gemäß Ablaufdiagramm in Fig. 2, an einer Steuervorrichtung, insbesondere einer Arbeitszellensteuerung 16 bis 18, oder an einem Produktionsmittel 5, insbesondere einer Verarbeitungsmaschine 6, sämtliche angeschlossene Produktionsmittel 5 abgefragt werden (Abfrage-Modul 28) und von diesen, definierte Daten, wie beispielsweise die jeweiligen Einstellungen, sowie Programmabläufe, Rezepte und sonstige Konfigurationen, ausgelesen werden und zusammen mit den internen Einstellungen 29, insbesondere der Verarbeitungsmaschine 6, zu einem Werkzeugdatensatz 30 für diesen Spritzgießteil 20 verbunden werden, wobei eine Auflistung 31 der notwendigen Produktionsmittel 5 für den Spritzgießteil 20, der auf dieser Verarbeitungsmaschine 6 produziert werden kann , jederzeit automatisch aus dem Werkzeugdatensatz 30 generiert werden kann und an einem Ausgabepunkt 32, vorzugsweise einem Display der Verarbeitungsmaschine 6, angezeigt werden kann, wie dies schematisch in Fig. 2 dargestellt ist.

Dieser erfindungsgemäßer Ablauf bzw. dieses Verfahrens gestattet einerseits die komplette Eliminierung des bisher notwendigen Werkzeugdatenblattes auf Papier, gemäß dem Stand der Technik, und gewährleistet andererseits die korrekte Anbindung der notwendigen Produktionsmittel 5 für das jeweilige Werkzeug 21, insbesondere deshalb, da aufgrund des Verfahrens speziell abgestimmte Kontrollmechanismen noch zusätzlich zu den angezeigten Werkzeugdatensätze eingesetzt werden können, um fehlerhafte Verbindungen und Einstellungen zu vermeiden. Eine Verwechslung des Werkzeugdatenblattes 30 für die Verarbeitungsmaschine 6, wie dies beim Stand der Technik leicht möglich ist, kann damit vollständig ausgeschlossen werden, da der oder die erzeugten Werkzeugdatensätze 30 direkt auf dem entsprechenden Produktionsmittel 5, insbesondere dem Verarbeitungsmaschen 6, gespeichert werden , sodass der Maschineneinrichter keinerlei Auswahl treffen muss, sondern nur diese Werkzeugdatensätze 30 für diese eine Arbeitszelle 2 bis 4 aufrufen kann und es somit zu keinen Verwechslungen kommen kann. Der erzeugte Werkzeugdatensatz 30 kann im System, insbesondere in den Speichern der Verarbeitungsmaschine 6 oder auf einem externen Speicher, vorzugsweise in einem MES/ERP-System (nicht dargestellt), gespeichert werden, sodass diese jederzeit abrufbar sind.

Wird ein manueller Werkzeugwechsel 33 eingeleitet, so wird ein sogenannter Anzeige-Modus 34 bzw. Werkzeugwechsel-Modus 34 gestartet bzw. aufgerufen, bei dem aus dem Werkzeugdatensatz 30 eine Auflistung 31 der notwendigen Produktionsmittel 5 generiert wird. Beispielsweise ist es möglich, dass in einem Kombination- Modul 35 der oder die Werkzeugdatensätze 30 mit der List 26 bzw. dem Arbeitszellenverzeichnis 26 verknüpft werden, wobei dieses Modul 35 auch entfallen kann.

Anschließend wird die daraus generierte Auflistung 31 am dafür einstellbaren Ausgabepunkt 32, der in dem gezeigten Ausführungsbeispiel das Display des Verarbeitungsgerätes 6 ist, angezeigt. Selbstverständlich ist es möglich, dass die Auflistung 31 bereits nach der manuell eingeleiteten Speicheranforderung 27 erzeugt und gespeichert wird, sodass beim manuellen Anfordern des Werkzeugtausches 33 die fertig erstellte Auflistung 31 nur mehr noch angezeigt wird.

Am Ausgabepunkt 32 sind vorzugsweise unterschiedlichste Daten für den Maschineneinrichter , wie beispielsweise die Auflistung 31, bestehend aus den dazugehörigen Produktionsmitteln 5 und der zugehörigen Prozesseinstellungen, Rezepten, Ablaufprogrammen für den Spritzgießteil 20, ein Symbolbild des Spritzgießteils 20 und ein Symbolbild des Werkzeuges 21, wobei die Symbolbilder mit entsprechenden Vermerken, Verlinkungen usw. versehen sein können, über die noch weitere detaillierte Daten abrufbar sind. Hierzu kann der Ausgabepunkt 32 vorzugsweise durch einen Touchscreen gebildet sein, sodass der Maschineneinrichter durch einfaches Berühren der Symbole, Verlinkungen und/oder Listen weitere Daten zur Verfügung gestellt bekommt. Auch ist es möglich, dass zu der erzeugten Auflistung 31 Kontrolllampen (nicht dargestellt) mit unterschiedlichen Farben, insbesondere rot für fehlendes Produktionsmittel 5 und grün für richtig angeschlossenes und erkanntes Produktionsmittel 5, zugeordnet sind, sodass der Maschineneinrichter auf einfache Weise erkennen kann, welche Produktionsmittel 5 bereits angeschlossen sind und welche noch fehlen. Beispielsweise können auch noch weitere Farben der Kontrolllampen für weitere Informationen eingesetzt werden, wie beispielsweise gelbe Kontrolllampe für Produktionsmittel 5 vorhanden, jedoch Werkzeugdatensatz 30 fehlerhaft bzw. noch nicht übertragen, usw.

Der Maschineneinrichter kann zuvor oder anschließend die einzelnen Produktionsmittel 5, welche für einen Werkzeugwechsel 33 des Werkzeuges 21 abgeschlossen werden müssen, abschließen und das Werkzeug 21 durch ein neues oder überholtes Werkzeug 21 tauschen. Zur Inbetriebnahme kann der Maschineneinrichter nunmehr aufgrund der am Ausgangspunkt 32 dargestellten Informationen die Arbeitszelle 2 bis 4, insbesondere die einzelnen Produktionsmittel 5, richtig anschließen. Vorzugsweise wird jedoch nach einem Werkzeugtausch 33 selbstständig beispielsweise über einen Prüfmodus 36 von der Steuervorrichtung, insbesondere der Arbeitszellensteuerung 16 bis 18, oder einem Produktionsmittel 5, insbesondere der Verarbeitungsmaschine 6, vor oder während der Inbetriebnahme überprüft, ob sämtliche Produktionsmittel 5 gemäß zugehörigem Werkzeugdatensatz 30 angeschlossen wurden und die entsprechenden Einstellungen vorgenommen wurden.

Zuvor oder während der Überprüfung oder auch durch eine manuelle Auslösung des Werkzeugtausches 33 ist es möglich, dass beim oder nach dem Werkzeugtausch 33 an der Verarbeitungsmaschine 6, der dazugehörige Werkzeugdatensatz 30 über ein externes MES- oder ERP-System zur Verarbeitungsmaschine 6 übermittelt oder aus dem internen Werkzeugkatalog 29 bzw. den Einstellungen 29 der Verarbeitungsmaschine 6 entnommen und der Werkzeugdatensatz 30 automatisch in die entsprechenden Bestandteile der angeschlossenen und notwendigen Produktionsmittel 5 aufgeteilt und an diese übertragen wird. Dadurch braucht der Maschineneinrichter das Produktionsmittel 5 nur mehr über das Schnittstellenkabel 12 anschließend, sodass dies von der Arbeitszellensteuerung 16 bis 18 erkannt wird und anschließend der dazugehörige Werkzeugdatensatz 30 an das Produktionsmittel 5 übermittelt wird. Es ist aber auch möglich, dass nach dem Erkennen des Anschließens eines Produktionsmittels 5 zuerst das neu erkannte Produktionsmittel 5 auf bereits installierte bzw. eingestellte Daten bzw. Werkzeugdatensätze 30 abgefragt wird und anschließend nur die fehlenden Daten ergänzt und/oder übertragen werden. Wurden alle Produktionsmittel 5 richtig erkannt und eingestellt, so wird dies über ein Freigabe-Modul 37 angezeigt, worauf vorzugsweise durch manuelle Eingabe, die Industrieanlage 1 für die Produktion des Spritzgießteils 20 freigeben wird und der Werkzeugwechsel beendet ist.

Als Werkzeugdatensätze können zusätzlich zu den maschineninternen Prozessparametern der Verarbeitungsmaschine 6 für beispielsweise die Plastifizierung, den Schmelze-Eintrag, sowie dem Werkzeugverschluss, die jeweiligen Einstellungen, Parameter, Kennungen der unterschiedlichen Produktionsmitteln 5 für die Werkzeugtemperierung, Kühlung, Materialtrocknung,-Dosierung und -förderung, sowie Ablaufprogramme für die automatische Entformung des jeweiligen Spritzgießteiles durch Roboter, Greiferkennungen, sowie Parameter für externe Prozesshilfsmittel und sonstige teilespezifische Daten hinterlegt werden. Der Werkzeugdatensatz weist zumindest einen Bereich für eine Verarbeitungsgerät 6, insbesondere eine Spritzgießmaschine, und einen oder mehrere Bereiche für Automatisierungsanlagen, Temperiergeräte, Durchflussregler, Materialtrockner und - Förderer, Dosiergeräte, Qualitätsprüfung, Werkzeugdaten, Heißkanalregler, und/oder externe Zusatzgeräte für die Prozessregelung, sowie Sonderprogramme und sonstige Informationen auf die automatisch ermittelt und/oder manuell erfasst, insbesondere eingegeben, werden.

Weiters ist es möglich, dass die Anzeige der an der Spritzgießmaschine 6 angesteckten Produktionsmittel 5, sowie der für das Werkzeug 21 benötigten Produktionsmittel 5 vorzugsweise an der Bedieneinheit der Spritzgießmaschine oder einem anderen zentralen Punkt in der Arbeitszelle 2 bis 4 angezeigt wird. Insbesondere ist es möglich, dass nach einer vorangegangenen automatischen Erfassung eines Werkzeugdatensatzes 30, bei Wiederaufruf dieses Werkzeugdatensatzes 30, fehlende Produktionsmittel 5 am Ausgabepunkt 32 angezeigt werden und/oder ein Warnsignal bzw. Warnleuchte ausgelöst wird.

In Fig. 3 ist eine Display-Anzeige des Ausgabepunktes 32 an einem Verarbeitungsgerät 6 schematisch vereinfacht dargestellt, aus der ein Soll/IstVergleich 37 dargestellt ist. Dabei weist die Anzeige unterschiedliche Bereiche auf, die jedoch beliebig angeordnet werden können und nur eine Ausführung als Beispiel dargestellt wurde.

Im oberen Bereich ist dabei der Name des Spritzgießteils 20 für den Werkzeugwechsel angegeben, worauf eine Darstellung des zu produzierenden Spritzgießteiles 20 folgt. Dabei ist es möglich, dass die Darstellung des Spritzgießteiles 20 mit diversen Zusatzfunktionen 39 und Links 39, beispielsweise für die Hinterlegung der Schließkraft (wie dargestellt) usw., hinterlegt sind, die jederzeit durch Aktivieren aufgerufen werden können. Die Zusatzfunktionen 39 und Links 39 können auch als Menü-Punkte ausgeführt sein.

Anschließend werden die einzelnen Produktionsmittel 5 aufgelistet, wobei vorzugsweise Links 40 der Sollzustand und Rechts 41 der Istzustand dargestellt ist. Zwischen den Bereichen ist eine Kontrolllampe 42 angeordnet, die anzeigt, ob die entsprechende aufgelistete Verknüpfung oder Punkte 43 vorhanden sind oder nicht. Hierbei erfolgt die Erkennung der hinter den Verknüpfungen 43 oder Punkten 43 liegenden Verbindungen mit einem Häkchen für alles in Ordnung - Verbindung und somit Produktionsmittel vorhanden, wogegen ein Kreuz für keine Verbindung gefunden oder falsche Verbindung angezeigt wird. Dies kann auch noch farblich mit grün und rot hinterlegt werden.

In dem gezeigten Ausführungsbeispiel sind die Bereiche für ein Verarbeitungsgerät 6, insbesondere eine Spritzgießmasche, die Peripheriegeräte 7, insbesondere ein Roboter 7b, ein Durchflussregler 7g, ein Temperiergerät 7a, ein Dosiergerät 7c und ein Trockner 7d, dargestellt, die entsprechende Verknüpfungen 43 oder Produktionsmittel 43 aufweisen.

Beim Soll-/Ist-Vergleich 38 sind Links 40 die Namen der notwendigen Verbindungen oder Produktionsmittel 43 für die Produktion des Spritzgießteiles 20, also beim Generieren des Werkzeugdatensatzes 30 dargestellt, wobei Rechts 41 die Namen der erkannten Geräte angezeigt werden. Wird dabei eine falsche Verbindung festgestellt, so wird dies mit einem Kreuz gekennzeichnet, sodass der Maschineneinrichter dies erkennen kann und aufgrund der unterschiedlichen Namen sofort den Fehler zuordnen kann.

Grundsätzlich ist zu erwähnen, dass die Anwendung des Werkzeugdatensatzes 30 auch auf Anlagen die nicht in Form von Arbeitszellen aufgebaut sind, angewandt werden kann. Auch ist es möglich, dass ein Aufruf des Werkzeugtauschs 33 jederzeit möglich ist, sodass beim Ablaufdiagramm gemäß Fig. 2 die Abfrage 27, insbesondere der Nein-Pfad, mit der Abfrage 33 für den Werkzeugtausch 33 optional verbunden werden kann.

Der Ordnung halber wird darauf hingewiesen, dass die Erfindung nicht auf die dargestellten Ausführungsvarianten beschränkt ist, sondern auch weitere Ausbildungen beinhalten können.

## Patentansprüche

1. Verfahren zur Ansicht und Auswahl von Produktionsmitteln, insbesondere peripheren Geräten, für die Spritzgießindustrie, die zum Erzeugen eines Spritzgießteils (20) in zumindest einer Arbeitszelle (2 bis 4) organisiert werden und über ein Netzwerk (19, 22) miteinander verbunden werden, wobei zumindest ein Produktionsmittel (5) als Verarbeitungsmaschine (6) ausgebildet ist, **dadurch gekennzeichnet, dass** nach manueller Speicheranforderung (27) an einer Steuervorrichtung, insbesondere einer Arbeitszellensteuerung (16 bis 18), oder an der Verarbeitungsmaschine (6), sämtliche angeschlossene Produktionsmittel (5) abgefragt werden und von diesen, definierte Daten, wie die jeweiligen Einstellungen (29), sowie Programmabläufe, Rezepte und sonstige Konfigurationen, ausgelesen werden und zusammen mit den internen Einstellungen (29), der Verarbeitungsmaschine (6), (30) in Abhängigkeit des Spritzgießteiles (20) zu einem Werkzeugdatensatz (30) verbunden und in ein oder mehrere Werkzeugdatensätze (30) gespeichert werden, wobei eine Auflistung (31), der für die Produktion dieses Spritzgießteils (20) notwendigen Produktionsmittel (5), jederzeit automatisch aus dem oder den Werkzeugdatensätzen (30) generiert wird und an einem Ausgabepunkt (32), vorzugsweise der Verarbeitungsmaschine (6), angezeigt wird, wobei die Übertragung der dem jeweiligen Produktionsmittel (5) zugehörigen definierten Daten auch zu den Produktionsmitteln (5) erfolgt.

2. Verfahren nach Anspruch 1 **dadurch gekennzeichnet, dass** nach Durchführung eines Werkzeugtausches (33) an der Verarbeitungsmaschine (6), der oder die dazugehörigen Werkzeugdatensätze (30) über ein externes MES- oder ERP-System (Manufacturing Execution System oder Enterprice Resource Planning-System) zur Verarbeitungsmaschine (6) übermittelt oder aus dem internen Werkzeugkatalog bzw. Einstellungen (29) der Verarbeitungsmaschine (6) entnommen werden und der oder die Werkzeugdatensätze (30) automatisch in die entsprechenden Bestandteile der angeschlossenen und notwendigen Produktionsmittel (5) aufgeteilt und an diese übertragen werden.

3. Verfahren nach Anspruch 1 oder 2, **dadurch gekennzeichnet, dass** als Werkzeugdatensätze (30) zusätzlich zu den maschineninternen Prozessparametern der Verarbeitungsmaschine (6) für beispielsweise die Plastifizierung, den Schmelze-Eintrag, sowie dem Werkzeugverschluss, die jeweiligen Einstellungen, Parameter, Kennungen der unterschiedlichen Produktionsmitteln (5) für die Werkzeugtemperierung, Kühlung, Materialtrocknung,-dosierung und -förderung, sowie Ablaufprogramme für die automatische Entformung des jeweiligen Spritzgießteiles (20) durch Roboter, Greiferkennungen, sowie Parameter für externe Prozesshilfsmittel und sonstige teilespezifische Daten hinterlegt werden.

4. Verfahren nach Anspruch 1 bis 3, **dadurch gekennzeichnet, dass** zusätzliche Daten bzw. Werkzeugdatensätze (30) zu jeweils einem Werkzeug (21) manuell direkt an einem Produktionsmittel (5), vorzugsweise der Verarbeitungsmaschine (6) oder über ein externes anschließbares oder über ein Netzwerk (19) verbundenes Eingabegerät, insbesondere einem Computer, eingegeben und/oder ausgewählt und gespeichert werden.

5. Verfahren nach einem der vorhergehenden Ansprüchen 1 bis 4, **dadurch gekennzeichnet, dass** nach einem Werkzeugwechsel (33) selbstständig von der Steuervorrichtung, insbesondere der Arbeitszellensteuerung (16 bis 18), oder einem Produktionsmittel (5), insbesondere der Verarbeitungsmaschine (6), vor der Inbetriebnahme überprüft wird, ob sämtliche Produktionsmittel (5) gemäß zugehörigem Werkzeugdatensatz oder Werkzeugdatensätzen (30) angeschlossen wurden und die entsprechenden Einstellungen vorgenommen wurden.

6. Verfahren nach einem der vorhergehenden Ansprüche 1 bis 5, **dadurch gekennzeichnet, dass** von der Steuervorrichtung, insbesondere der Arbeitszellensteuerung (16 bis 18), oder dem Produktionsmittel (5), insbesondere der Verarbeitungsmaschine (6), eine Vorschau und/oder ein Soll-/Ist-Vergleich der neu angeschlossenen und eingestellten Produktionsmittel (5) mit den notwendigen Produktionsmitteln (5) gemäß dem oder den gespeicherten Werkzeugdatensätzen (30) vorgenommen wird.

7. Verfahren nach einem der vorhergehenden Ansprüche 1 bis 6, **dadurch gekennzeichnet, dass** von der Steuervorrichtung, insbesondere der Arbeitszellensteuerung (16 bis 18), oder der Steuerung der Verarbeitungsmaschine (6), aus den Werkzeugdatensätzen (30) eine Liste (26) für die Arbeitszelle (2 bis 4), insbesondere ein Arbeitszellenverzeichnis (26), generiert wird.

8. Verfahren nach einem der vorhergehenden Ansprüche 1 bis 7, **dadurch gekennzeichnet, dass** die Speicherung der Werkzeugdatensätze (30) auf einem Produktionsmittel (5), insbesondere der Verarbeitungsmaschine (6), oder auf einem externen Speicher, vorzugsweise in einem MES/ERP-System (Manufacturing Execution System / Enterprice Resource Planning-System) erfolgt.

9. Verfahren nach einem der vorhergehenden Ansprüche 1 bis 8, **dadurch gekennzeichnet, dass** der oder die Werkzeugdatensätze (30) zumindest einen Bereich für eine Spritzgießmaschine und einen oder mehrere Bereiche für Automatisierungsanlagen, Temperiergeräte, Durchflussregler, Materialtrockner und -förderer, Dosiergeräte, Qualitätsprüfung, Werkzeugdaten, Heißkanalregler, und/oder externe Zusatzgeräte für die Prozessregelung, sowie Sonderprogramme und sonstige Informationen aufweist, die automatisch ermittelt und/oder manuell erfasst, insbesondere eingegeben, werden.

10. Verfahren nach einem der vorhergehenden Ansprüche 1 bis 9, **dadurch gekennzeichnet, dass** nach einer vorangegangenen automatischen Erfassung eines oder mehrerer Werkzeugdatensätze, bei Wiederaufruf dieses oder dieser Werkzeugdatensätze, fehlende Produktionsmittel am Ausgabepunkt angezeigt werden und/oder ein Warnsignal bzw. Warnleuchte ausgelöst wird.

11. Industrieanlage (1) oder Produktionssystem zum Durchführen des Verfahrens nach einem der Ansprüche 1 bis 10, umfassend zumindest eine oder mehrere Produktionsmittel (5), die in einer oder mehreren Arbeitszellen (2 bis 4) zusammen gefasst sind, wobei sich die Produktionsmittel (5) aus mindestens einer Verarbeitungsmaschine (6) und einem oder mehreren peripheren Geräten zusammensetzen und die Arbeitszellensteuerung (16 bis 18) für die Kommunikation mit einem Netzwerk (19), insbesondere einem Intranet (19a) und/oder einem Internet (19b) und andererseits zur Kommunikation mit den Produktionsmitteln (5) der Arbeitszelle (2 bis 4), insbesondere über das Produktionsmittel-Netzwerk (22), ausgebildet ist, **dadurch gekennzeichnet, dass** eine Steuervorrichtung, insbesondere in Form einer Arbeitszellensteuerung (16 bis 18), oder ein Produktionsmittel (5), insbesondere eine Verarbeitungsmaschine (6), zum Abfragen und Speichern von einem oder mehreren Werkzeugdatensätzen (30) ausgebildet ist, wobei ein oder mehrere Werkzeugdatensätze zu dem Spritzgießteil (3) mit einer Auflistung (31) der anzuschließenden Produktionsmitteln (5) an einem Ausgabepunkt (32) manuell oder automatisch aufrufbar und ablesbar ist.

## Claims

1. Method for viewing and selecting production resources, in particular peripheral devices, for the injection-molding industry, which are organized in at least one work cell (2 to 4) for producing an injection-molded part (20) and are connected to one another via a network (19, 22), wherein at least one production resource (5) is designed as a processing machine (6), **characterized in that, following** a manual storage request (27) on a control device, in particular a work cell controller (16 to 18), or on the processing machine (6), all connected production resources (5) are queried, and defined data, such as the respective settings (29), as well as program sequences, formulations and other configurations, are read out from these and combined with the internal settings (29) of the processing machine (6) (30), in a manner depending on the injection-molded part (20), to form a mold data record (30) and stored in one or several mold data records (30), whereby a list (31) of the production resources (5) required for the production of this injection-molded part (20) is automatically generated at any time from the mold data record or records (30) and displayed at an output point (32), preferably the processing machine (6), whereby the defined data associated with the respective production means (5) are transmitted to the production resources (5) as well.

2. Method according to claim 1, **characterized in that** after performance of a tool change (33) on the processing machine (6), the associated mold data record or records (30) is/are transmitted to the processing machine (6) via an external MES or ERP system (Manufacturing Execution System or Enterprise Resource Planning System) or is/are taken from the internal tool catalog or the settings (29) of the processing machine (6), respectively, and the mold data record or records (30) is/are automatically assigned to the corresponding components of the connected and necessary production resources (5) and transferred to the same.

3. Method according to claim 1 or 2, **characterized in that** as mold data records (30), in addition to the machine-internal process parameters of the processing machine (6) for e.g. plasticizing, melt entry, and mold closure, the respective settings, parameters, identifiers of the various production resources (5) for mold temperature control, cooling, material drying, metering and conveying, as well as workflow programs for automatic demolding of the respective injection-molded part (20) by robots, gripper identifiers, as well as parameters for external process aids and other part-specific data can be stored.

4. Method according to claim 1 to 3, **characterized in that** additional data or mold data records (30), respectively, for one tool each (21) are manually entered and/or selected and stored directly on a production resource (5), preferably the processing machine (6), or via an external input device, in particular a computer, that can be connected or is linked via a network (19).

5. Method according to any of the preceding claims 1 to 4, **characterized in that** after a tooling change (33) it is checked independently by the control device, in particular the work cell controller (16 to 18), or a production resource (5), in particular the processing machine (6), before start-up, whether all production resources (5) have been connected according to the associated mold data record or records (30) and the corresponding settings made.

6. Method according to any of the preceding claims 1 to 5, **characterized in that** a preview and/or a target/actual comparison of the newly connected and set-up production resources (5) with the necessary production resources (5) is carried out by the control device, in particular the work cell controller (16 to 18), or the production resource (5), in particular the processing machine (6), in accordance with the stored mold data record or records (30).

7. Method according to any of the preceding claims 1 to 6, **characterized in that** a list (26) for the work cell (2 to 4), in particular a work cell directory (26), is generated from the mold data records (30) by the control device, in particular the work cell controller (16 to 18), or the controller of the processing machine (6).

8. Method according to any of the preceding claims 1 to 7, **characterized in that** the storage of the mold data records (30) is carried out on a production resource (5), in particular the processing machine (6), or on an external storage system, preferably in a MES/ERP system (Manufacturing Execution System / Enterprise Resource Planning System).

9. Method according to any of the preceding claims 1 to 8, **characterized in that** the mold data record or records (30) comprise/s at least one area for an injection-molding machine and one or several areas for automation systems, temperature control units, flow controllers, material dryers and conveyors, metering devices, quality testing, mold data, hot runner controllers, and/or external auxiliary devices for process control, as well as special programs and other information which is automatically determined and/or manually recorded, in particular entered.

10. Method according to any of the preceding claims 1 to 9, **characterized in that** after a preceding automatic acquisition of one or several mold data records, upon recall of this mold data record or these mold data records any missing production resources are indicated at the output point, and/or a warning signal or warning light, respectively, is triggered.

11. Industrial installation (1) or production system for carrying out the method according to any of claims 1 to 10, comprising at least one or several production resources (5), which are preferably combined in one or more work cells (2 to 4), wherein the production resources (5) consist of at least one processing machine (6) and one or several peripheral devices and the work cell controller (16 to 18) is designed for communication with a network (19), in particular an intranet (19a) and/or an internet (19b), and on the other hand for communication with the production resources (5) of the work cell (2 to 4), in particular via the production resources network (22), **characterized in that** a control device, in particular in the form of a work cell controller (16 to 18), or a production resource (5), in particular a processing machine (6), is designed for querying and storing one or several mold data records (30), wherein one or several mold data records for the injection-molded part (3) with a listing (31) of the production resources to be connected (5) can be called up and read off manually or automatically at an output point (32).

## Revendications

1. Procédé dédié à la visualisation et à la sélection des moyens de production, en particulier des appareils périphériques, pour l'industrie de moulage par injection, qui sont organisés dans au moins une cellule de travail (2 à 4) en vue de la production d'une pièce moulée par injection (20) et sont reliés entre eux via un réseau (19, 22), au moins un moyen de production (5) étant conçu sous forme de machine de traitement (6), **caractérisé en ce que,** après une demande manuelle d'enregistrement (27) sur un dispositif de commande, en particulier une commande de cellule de travail (16 à 18), ou sur la machine de traitement (6), tous les moyens de production (5) raccordés sont interrogés et des données définies telles que les réglages respectifs (29) ainsi que des déroulements de programme sont transmises par ceux-ci, des recettes et autres configurations sont lues et sont compilées conjointement avec les réglages internes (29) de la machine de traitement (6), (30) en fonction de la pièce moulée par injection (20) en un jeu de données d'outils (30) et enregistrées dans un ou plusieurs jeux de données d'outils (30), une liste (31) des moyens de production (5) nécessaires à la production de cette pièce moulée par injection (20) étant générée automatiquement à tout moment à partir du ou des jeux de données d'outils (30) et étant affichée sur un point de sortie (32), de préférence la machine de traitement (6), la transmission des données définies associées au moyen de production (5) respectif s'effectuant également vers les moyens de production (5).

2. Procédé selon la revendication 1, **caractérisé en ce que**, après l'exécution du changement d'un outil (33) sur la machine de traitement (6), le ou les jeux de données d'outils (30) associés sont transmis à la machine de traitement (6) via un système MES ou ERP externe (Manufacturing Execution System ou Enterprise Resource Planning System) ou sont prélevés à partir d'un catalogue d'outils ou des réglages (29) internes de la machine de traitement (6), et le ou les jeux de données d'outils (30) sont automatiquement répartis aux composants respectifs des moyens de production (5) raccordés nécessaires et sont transmis à ceux-ci.

3. Procédé selon la revendication 1 ou 2, **caractérisé en ce que**, en plus des paramètres de processus internes à la machine de traitement (6), par exemple pour la plastification, l'apport de la masse fondue ainsi que la fermeture de l'outil, les réglages, les paramètres et les données d'outil respectifs des différents moyens de production (5) sont enregistrés en tant que jeux de données d'outils (30) pour la thermorégulation de l'outil, le refroidissement, le séchage, le dosage et le transport de la matière ainsi que des programmes de déroulement pour le démoulage automatique de la pièce moulée par injection (20) respective par des robots, les détecteurs pour pinces de préhension ainsi que des paramètres pour des moyens auxiliaires de processus externes et d'autres données spécifiques à la pièce.

4. Procédé selon les revendications 1 à 3 **caractérisé en ce que** des données ou des jeux de données d'outils (30) supplémentaires concernant respectivement un outil (21) sont saisis et/ou sélectionnés et enregistrés manuellement directement sur un moyen de production (5), de préférence la machine de traitement (6) ou via un appareil de saisie externe pouvant être raccordé ou relié via un réseau (19), en particulier un ordinateur.

5. Procédé selon l'une des revendications précédentes 1 à 4, **caractérisé en ce que**, après le changement d'un outil (33), le dispositif de commande, en particulier la commande de cellule de travail (16 à 18), ou un moyen de production (5), en particulier la machine de traitement (6), vérifie de manière autonome avant la mise en service si tous les moyens de production (5) ont bien été raccordés selon le ou les jeux de données d'outils (30) associés et si les réglages correspondants ont bien été configurés.

6. Procédé selon l'une des revendications précédentes 1 à 5 **caractérisé, en ce que** le dispositif de commande, en particulier la commande de cellule de travail (16 à 18), ou le moyen de production (5), en particulier la machine de traitement (6), effectue une prévisualisation et/ou une comparaison de l'état théorique/réel des nouveaux moyens de production (5) raccordés et configurés avec les moyens de production (5) nécessaires selon le ou les jeux de données d'outils (30) enregistrés.

7. Procédé selon l'une des revendications précédentes 1 à 6, **caractérisé en ce qu'**une liste (26) pour la cellule de travail (2 à 4), en particulier un répertoire de cellules de travail (26), est générée par le dispositif de commande, en particulier la commande de cellules de travail (16 à 18), ou la commande de la machine de traitement (6) à partir des jeux de données d'outils (30).

8. Procédé selon l'une des revendications précédentes 1 à 7, **caractérisé en ce que** l'enregistrement des jeux de données d'outils (30) est effectué sur un moyen de production (5), notamment la machine de traitement (6) ou sur une mémoire externe, de préférence dans un système MES/ERP (Manufacturing Execution System / Enterprise Resource Planning System).

9. Procédé selon l'une des revendications précédentes 1 à 8, **caractérisé en ce que** le ou les jeux de données d'outils (30) comportent au moins une zone pour une machine de moulage par injection et une ou plusieurs zones pour des installations d'automatisation, des appareils de thermorégulation, des régulateurs de débit, des sécheurs et des transporteurs de matière, des appareils de dosage, des contrôles de qualité, des données d'outils, des régulateurs de canaux chauds et/ou des appareils supplémentaires externes pour la régulation de processus ainsi que des programmes spéciaux et d'autres informations, qui sont déterminées automatiquement et/ou collectées manuellement, en particulier saisies.

10. Procédé selon l'une des revendications précédentes 1 à 9, **caractérisé en ce qu'**après une saisie automatique préalable d'un ou de plusieurs jeux de données d'outils, lors d'une nouvelle consultation de ce ou de ces jeux de données d'outils, des moyens de production manquants sont affichés au point de sortie et/ou un signal ou voyant d'avertissement est déclenché.

11. Installation industrielle (1) ou système de production destiné à l'exécution du procédé selon l'une des revendications 1 à 10, comprenant au moins un ou plusieurs moyens de production (5) regroupés dans une ou plusieurs cellules de travail (2 à 4), lesdits moyens de production (5) se composant d'au moins une machine de traitement (6) et d'un ou de plusieurs appareils périphériques, et la commande de cellules de travail (16 à 18) étant destinée à communiquer avec un réseau (19), notamment un intranet (19a) et/ou Internet (19b) et, d'autre part, à la communication avec les moyens de production (5) de la cellule de travail (2 à 4), en particulier via le réseau de moyens de production (22), **caractérisé en ce qu'**un dispositif de commande, en particulier sous la forme d'une commande de cellules de travail (16 à 18) ou un moyen de production (5), en particulier une machine de traitement (6), est conçu pour interroger et enregistrer un ou plusieurs jeux de données d'outils (30), un ou plusieurs jeux de données d'outils concernant la pièce moulée par injection (3) avec une liste (31) des moyens de production (5) à raccorder pouvant être consultés et lus manuellement ou automatiquement à un point de sortie (32).
